(19) Europäisches Patentamt / European Patent Office / Office européen des brevets

(11) **EP 2 359 462 B1**

(12) **FASCICULE DE BREVET EUROPEEN**

(45) Date de publication et mention de la délivrance du brevet:
**07.05.2014 Bulletin 2014/19**

(21) Numéro de dépôt: **09802129.8**

(22) Date de dépôt: **14.12.2009**

(51) Int Cl.:
***H02M 7/5387*** (2007.01)

(86) Numéro de dépôt international:
**PCT/EP2009/067009**

(87) Numéro de publication internationale:
**WO 2010/069891 (24.06.2010 Gazette 2010/25)**

(54) **VARIATEUR DE VITESSE DE TYPE CONVERTISSEUR MATRICIEL**

EINRICHTUNG MIT VARIABLER GESCHWINDIGKEIT DES MATRIXUMRICHTERTYPS

VARIABLE SPEED DEVICE OF THE MATRIX CONVERTER TYPE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **18.12.2008 FR 0858760**

(43) Date de publication de la demande:
**24.08.2011 Bulletin 2011/34**

(73) Titulaire: **Schneider Toshiba Inverter Europe SAS
27120 Pacy sur Eure (FR)**

(72) Inventeurs:
  • **BAUDESSON, Philippe**
    **F-27220 La Boissière (FR)**
  • **DELARUE, Philippe**
    **F-59223 Roncq (FR)**
  • **GRUSON, François**
    **F-59270 Bailleul (FR)**
  • **LE MOIGNE, Philippe**
    **F-59310 Nomain (FR)**

(74) Mandataire: **Bié, Nicolas
Schneider Electric Industries SAS
Service Propriété Industrielle
35 rue Joseph Monier - CS 30323
92506 Rueil-Malmaison Cedex (FR)**

(56) Documents cités:
**WO-A1-2007/129755     JP-A- 2006 129 620
JP-A- 2008 259 380**

• **AKIO ISHIGURO ET AL: "A NOVEL CONTROL METHOD FOR FORCED COMMUTATED CYCLOCONVERTERS USING INSTANTANEOUS VALUES OF INPUT LINE-TO-LINE VOLTAGES" IEEE TRANSACTIONS ON INDUSTRIAL ELECTRONICS, IEEE SERVICE CENTER, PISCATAWAY, NJ, USA, vol. 38, no. 3, 1 juin 1991 (1991-06-01), pages 166-172, XP000234789 ISSN: 0278-0046 cité dans la demande**

EP 2 359 462 B1

## Description

La présente invention se rapporte à un procédé de commande d'un variateur de vitesse de type convertisseur matriciel ainsi qu'au variateur de vitesse correspondant mettant en oeuvre le procédé.

Un variateur de vitesse de type convertisseur matriciel comporte neuf interrupteurs bidirectionnels arrangés au sein d'une matrice de commutation comportant trois cellules de commutation. Cette matrice de commutation est connectée d'un côté à trois phases d'entrée u, v, w reliées à une source de tension alternative et de l'autre côté à trois phases de sortie a, b, c reliées à la charge. Les interrupteurs sont commandés individuellement pour connecter une phase de sortie à l'une quelconque des phases d'entrée.

Généralement, les ordres de commande des interrupteurs d'un convertisseur matriciel peuvent être générés par différentes méthodes telles que la Modulation par Vecteur d'Espace (MVE), modulation vectorielle ou modulation intersective.

Le document JP 2006 129620 A divulgue un procédé de commande d'un variateur de vitesse de type convertisseur matriciel selon le préambule de la revendication 1.

Le document IEEE TRANSACTIONS ON INDUSTRIAL ELECTRONICS, vol. 38, N°3, June 1991 intitulé "A novel control method for forced commutated cycloconverters using instantaneous values of input line-to-line voltages" et rédigé par Akio ISHIGURO, Takeshi FURUHASHI et Shigeru OKUMA décrit une méthode de commande d'un cycloconvertisseur. Cette méthode consiste à exprimer les tensions de sortie de référence en fonction des tensions d'entrée et des rapports cycliques de commutation des interrupteurs. Le document propose notamment de bloquer en permanence sur une période de découpage un interrupteur d'une cellule de commutation afin d'augmenter jusqu'à son maximum la profondeur de modulation. On obtient alors Ventrée=0,86XVsortie au lieu de Ventrée=0,75XVsortie.

L'introduction d'une phase nulle permet d'appliquer le blocage d'une des cellules du convertisseur sur une période de découpage. Cela permet d'augmenter les performances électriques en sortie du convertisseur (tension moyenne en sortie plus élevée) et de limiter à huit le nombre d'états d'actifs (ou nombre de commutations) sur une période de découpage des deux cellules non bloquées. Ce nombre réduit d'états actifs sur une période de découpage permet de réduire d'un tiers le nombre de commutations et donc de réduire à la fois les pertes par commutation et les tensions de mode commun. Cependant, le blocage d'une cellule au cours de la période de découpage ne permet pas d'atteindre l'optimum en terme de réduction :

- des pertes par commutation lorsque courant et tension de sortie sont en phase,

- des tensions de mode commun,

En effet, la cellule bloquée ne permet pas d'imposer systématiquement sur une période de découpage la somme totale la plus faible en valeur absolue des tensions d'entrée aux deux autres cellules qui commutent.

Le but de l'invention est de proposer un procédé de commande d'un variateur de vitesse de type convertisseur matriciel, ce procédé de commande permettant d'atteindre l'optimum en terme de réduction des pertes par commutation et des tensions de mode commun.

Ce but est atteint par un procédé de commande mis en oeuvre dans un variateur de vitesse de type convertisseur matriciel comportant :

- trois phases d'entrée connectées à une source de tension alternative et trois phases de sortie connectées à une charge électrique,
- neuf interrupteurs électroniques bidirectionnels en courant et en tension répartis dans trois cellules de commutation et destinés à être commandés individuellement pour connecter une phase de sortie à l'une quelconque des phases d'entrée, la commutation des interrupteurs du convertisseur obéissant à une matrice de rapports cycliques permettant d'obtenir une tension de sortie à destination de la charge,
- ladite matrice de rapports cycliques comportant une phase nulle,
- caractérisé en ce que le procédé comporte :
- une étape de suppression de la phase nulle dans la matrice de rapports cycliques,
- une étape de positionnement d'une nouvelle phase nulle dans la matrice de rapports cycliques afin de réduire au maximum les pertes par commutation et les tensions de mode commun.

Selon une particularité, l'étape de positionnement de la nouvelle phase nulle consiste à déterminer le vecteur tension d'entrée ($V_{entrée}$) et à déterminer l'emplacement de la nouvelle phase nulle en fonction de la position de ce vecteur par rapport aux différentes tensions simples d'entrée.

Selon une autre particularité, les ordres de commande des interrupteurs électroniques bidirectionnels sont déterminés par modulation de type intersective.

Selon une autre particularité, la modulation de type intersective est mise en oeuvre par application des rapports cycliques de la matrice de rapports cycliques sous forme de modulantes sur deux porteuses distinctes.

Selon une autre particularité, les deux porteuses sont de forme triangulaire, de fréquence égale à la fréquence de découpage, l'une des porteuses étant l'inverse de l'autre porteuse.

Selon une autre particularité, les modulantes d'une ligne de la matrice de rapports cycliques s'appliquent toujours à la même porteuse.

Selon une autre particularité, la ligne de la matrice de rapports cycliques comportant le rapport cyclique le plus grand n'est appliquée à aucune des deux porteuses et les deux lignes non exclues sont comparées chacune à l'une des porteuses.

L'invention concerne également un variateur de vitesse de type convertisseur matriciel comportant :

- trois phases d'entrée connectées à une source de tension alternative et trois phases de sortie connectées à une charge électrique,
- neuf interrupteurs électroniques bidirectionnels en courant et en tension répartis dans trois cellules de commutation et destinés à être commandés individuellement pour connecter une phase de sortie à l'une quelconque des phases d'entrée, la commutation des interrupteurs du convertisseur obéissant à une matrice de rapports cycliques permettant d'obtenir une tension de sortie à destination de la charge,
- ladite matrice de rapports cycliques comportant une phase nulle,
- caractérisé en ce que le variateur comporte :
- des moyens pour supprimer la phase nulle dans la matrice de rapports cycliques,
- des moyens pour positionner une nouvelle phase nulle dans la matrice de rapports cycliques afin de réduire au maximum les pertes par commutation et les tensions de mode commun.

Selon une particularité, le variateur comporte des moyens de détermination du vecteur tension d'entrée et de détermination de l'emplacement de la nouvelle phase nulle en fonction de la position de ce vecteur par rapport aux différentes tensions simples d'entrée.

Selon une autre particularité, les ordres de commande des interrupteurs électroniques bidirectionnels sont déterminés par modulation de type intersective.

Selon une autre particularité, la modulation de type intersective est mise en oeuvre par application des rapports cycliques de la matrice de rapports cycliques sous forme de modulantes sur deux porteuses distinctes.

Selon une autre particularité du variateur de vitesse, les deux porteuses sont de forme triangulaire, de fréquence égale à la fréquence de découpage, l'une des porteuses étant l'inverse de l'autre porteuse.

D'autres caractéristiques et avantages vont apparaître dans la description détaillée qui suit en se référant à un mode de réalisation donné à titre d'exemple et représenté par les dessins annexés sur lesquels :

- la figure 1 représente schématiquement le principe de réalisation d'un variateur de vitesse de type convertisseur matriciel,

- la figure 2 représente schématiquement le principe de fonctionnement du procédé de commande de l'invention,

- la figure 3 illustre le principe de fonctionnement du sélecteur d'entrée utilisé dans le convertisseur virtuel de l'invention,

- la figure 4 illustre le principe de fonctionnement du sélecteur de sortie utilisé dans le convertisseur virtuel de l'invention,

- les figures 5A et 5B montrent les différences entre les potentiels des phases d'entrées utilisés pour justifier de modifier l'emplacement de la phase nulle,

- la figure 6 représente les différents secteurs de positionnement du vecteur tension d'entrée permettant d'indiquer l'emplacement de la nouvelle phase nulle,

- la figure 7 représente les deux porteuses x et y triangulaires inversées utilisées pour définir la modulation de largeur d'impulsions,

- la figure 8 illustre le principe de choix de la première ou de la seconde porteuse,

- la figure 9 représente un exemple de modulation intersective effectuée à l'aide des deux porteuses choisies pour l'invention.

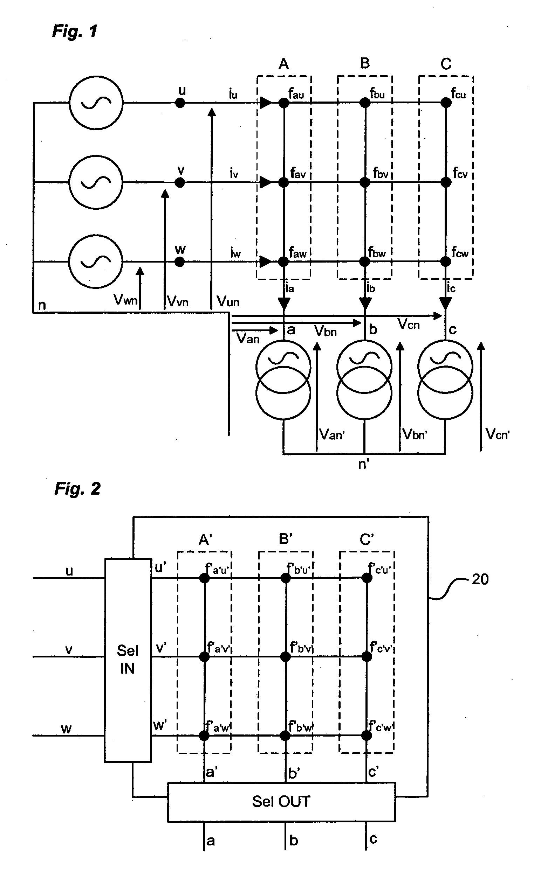

En référence à la figure 1, un variateur de vitesse de type convertisseur matriciel comporte neuf interrupteurs bidirectionnels en courant et en tension de type double IGBTs + diodes antiparallèles en série ou RB-IGBT (pour Reverse Blocking IGBT qui comporte deux interrupteurs IGBT) arrangés sous la forme d'une matrice de commutation comportant trois cellules de commutation A, B, C de trois interrupteurs chacune. Le variateur comporte en outre trois phases d'entrée u, v, w connectées à une source de tension alternative et trois phases de sortie a, b, c connectées à une charge électrique (non représentée) à commander.

Chacun des neuf interrupteurs bidirectionnels est commandé individuellement pour connecter une phase de sortie a, b, c à l'une quelconque des phases d'entrée u, v, w. La commande des interrupteurs bidirectionnels est réalisée à partir d'une matrice de commande 3X3 comportant les rapports cycliques des interrupteurs de la matrice de commutation. Chaque cellule de commutation A, B, C commande la tension sur une phase de sortie a, b ou c à partir des rapports cycliques de trois interrupteurs connectés aux trois phases d'entrée u, v, w. Un seul interrupteur par cellule de commutation A, B, C peut être commandé à l'état fermé. Sur la figure 1, les points désignés fau, fav, faw, fbu, fbv, fbw, fcu, fcv, fcw représentent chacun un interrupteur bidirectionnel.

Par convention les interrupteurs de chaque cellule de commutation sont numérotés de 1 à 3. Ainsi pour identifier l'état actif de la matrice de commutation, on indique le numéro de l'interrupteur fermé dans chaque cellule. Par exemple, l'état actif 131 signifie que l'interrupteur du haut (fau-n°1) de la cellule A est fermé, que l'interrupteur du bas (fbw-n°3) de la cellule B est fermé et que l'interrupteur du haut (fcu-n°1) de la cellule C est fermé.

La matrice de commande 3X3 se présente de la manière suivante :

$$M = \begin{Bmatrix} a_u & b_u & c_u \\ a_v & b_v & c_v \\ a_w & b_w & c_w \end{Bmatrix}$$

Dans laquelle :

- $a_u$, $a_v$, $a_w$ sont les rapports cycliques respectifs des interrupteurs fau, fav, faw,

- $b_u$, $b_v$, $b_w$ sont les rapports cycliques respectifs des interrupteurs fbu, fbv, fbw,

- $c_u$, $c_v$, $c_w$ sont les rapports cycliques respectifs des interrupteurs fcu, fcv, fcw.

Il est connu par le document de l'art antérieur IEEE TRANSACTIONS ON INDUSTRIAL ELECTRONICS, vol. 38, N°3, June 1991 intitulé "A novel control method for forced commutated cycloconverters using instantaneous values of input line-to-line voltages" et rédigé par Akio ISHIGURO, Takeshi FURUHASHI et Shigeru OKUMA de bloquer l'une des trois cellules de commutation A, B, C pour augmenter la profondeur de modulation jusqu'à 0,86. Pour cela, l'un des rapports cycliques de la cellule de commutation bloquée est fixé à un. Il s'agit par exemple du rapport cyclique au du premier interrupteur fau de la cellule de commutation A. On obtient alors la matrice de commande suivante :

$$M = \begin{Bmatrix} 1 & b_u & c_u \\ 0 & b_v & c_v \\ 0 & b_w & c_w \end{Bmatrix}$$

Or il est connu que les tensions de sortie de référence dépendent des tensions d'entrée et des rapports cycliques. Dans un réseau triphasé, il suffit de contrôler deux des trois tensions composées (c'est-à-dire les tensions entre deux phases) pour déterminer le système. On obtient alors les relations suivantes :

$$\begin{cases} u^*_{ab} = b_{uv} \cdot u_{uv} + b_{vw} \cdot u_{vw} + b_{uw} \cdot u_{uw} + b_u \cdot u_{uu} \\ u^*_{ac} = c_{uv} \cdot u_{uv} + c_{vw} \cdot u_{vw} + c_{uw} \cdot u_{uw} + c_u \cdot u_{uu} \end{cases}$$

Dans lesquelles :

- $u^*_{ab}$ désigne la tension de référence de sortie entre les phases de sortie a et b,

- $u^*_{ac}$ désigne la tension de sortie de référence entre les phases de sortie a et c,

- $b_{uv}$ représente le rapport cyclique de la combinaison d'interrupteurs fau+fbv ou fbu+fav, selon le signe des tensions d'entrée et de sortie,

- $b_{vw}$ représente le rapport cyclique de la combinaison d'interrupteurs fav+fbw ou faw+fbv, selon le signe des tensions d'entrée et de sortie,

- $b_{uw}$ représente le rapport cyclique de la combinaison d'interrupteurs fau+fbw ou faw+fbu, selon le signe des tensions d'entrée et de sortie,

- $b_u$ représente le rapport cyclique de l'interrupteur fbu,

- $c_{uv}$ représente le rapport cyclique de la combinaison d'interrupteurs fau+fcv ou fav+fcu, selon le signe des tensions d'entrée et de sortie,

- $c_{vw}$ représente le rapport cyclique de la combinaison d'interrupteurs fav+fcw ou faw+fcv, selon le signe des tensions d'entrée et de sortie,

- $c_{uw}$ représente le rapport cyclique de la combinaison d'interrupteurs fau+fcw ou faw+fcu, selon le signe des tensions d'entrée et de sortie,

- $c_u$ représente le rapport cyclique de l'interrupteur fcu.

Comme $u_{uv} + u_{vw} + u_{wu} = 0$, on obtient alors :

$$\begin{cases} u^*_{ab} = b_{uv} \cdot u_{uv} + b_{vw} \cdot (u_{vu} + u_{uw}) + b_{uw} \cdot u_{uw} + b_u \cdot u_{uu} \\ u^*_{ac} = c_{uv} \cdot u_{uv} + c_{vw} \cdot (u_{vu} + u_{uw}) + c_{uw} \cdot u_{uw} + c_u \cdot u_{uu} \end{cases}$$

Ce qui donne ensuite :

$$\begin{cases} u^*_{ab} = (b_{uv} - b_{vw}) \cdot u_{uv} + (b_{uw} + b_{vw}) \cdot u_{uw} + b_u \cdot u_{uu} \\ u^*_{ac} = (c_{uv} - c_{vw}) \cdot u_{uv} + (c_{uw} + c_{vw}) \cdot u_{uw} + c_u \cdot u_{uu} \end{cases}$$

Or

$$\begin{cases} b_v = (b_{uv} - b_{vw}) \\ b_w = (b_{uw} + b_{vw}) \\ c_v = (c_{uv} - c_{vw}) \\ c_w = (c_{uw} + c_{vw}) \end{cases}$$

On obtient alors les relations finales suivantes :

$$\begin{cases} u^{*}_{ab} = b_v \cdot u_{uv} + b_w \cdot u_{uw} + b_u \cdot u_{uu} \\ u^{*}_{ac} = c_v \cdot u_{uv} + c_w \cdot u_{uw} + c_u \cdot u_{uu} \end{cases}$$

Et on en déduit alors la matrice de rapports cycliques suivante :

$$M = \begin{cases} a_u = 1 & b_u = 1 - b_v - b_w & c_u = 1 - c_v - c_w \\ a_v = 0 & b_v = \dfrac{(u_{uv} - u_{vw}) \cdot u^{*}_{ab}}{u^2_{uv} + u^2_{vw} + u^2_{uw}} & c_v = \dfrac{(u_{uv} - u_{vw}) \cdot u^{*}_{ac}}{u^2_{uv} + u^2_{vw} + u^2_{uw}} \\ a_w = 0 & b_w = \dfrac{(u_{uw} + u_{vw}) \cdot u^{*}_{ab}}{u^2_{uv} + u^2_{vw} + u^2_{uw}} & c_w = \dfrac{(u_{uw} + u_{vw}) \cdot u^{*}_{ac}}{u^2_{uv} + u^2_{vw} + u^2_{uw}} \end{cases}$$

Avec comme conditions :

$$\begin{cases} b_u + b_v + b_w = 1 \\ c_u + c_v + c_w = 1 \end{cases} \quad \text{et} \quad \begin{cases} 0 \le b_u \le 1 \\ 0 \le b_v \le 1 \\ 0 \le b_w \le 1 \\ 0 \le c_u \le 1 \\ 0 \le c_v \le 1 \\ 0 \le c_w \le 1 \end{cases}$$

En partant de la matrice M ci-dessus, on comprend que ces conditions sont satisfaites si :

$$\begin{cases} u_{uv} - u_{vw} > 0 \\ u_{uw} + u_{vw} > 0 \end{cases}$$

Comme $u_{uv} + u_{vw} + u_{wu} = 0$ , on obtient alors les deux conditions suivantes :

$$\begin{cases} 2 \cdot u_{uv} - u_{uw} > 0 \\ 2 \cdot u_{uw} - u_{uv} > 0 \end{cases}$$

Ces deux conditions sont remplies lorsque $u_{uv}$ et $u_{uw}$ sont les deux plus grandes tensions composées en valeur absolue. Cependant, comme les tensions du réseau évoluent, ce n'est pas toujours le cas. Par conséquent, la matrice M de rapports cycliques exprimée ci-dessus ne peut pas être employée en permanence pour commander les interrupteurs.

En référence à la figure 2, le procédé de commande de l'invention consiste à se ramener en permanence au cas particulier de la matrice M. Pour cela, le procédé de commande de l'invention utilise une matrice de commande virtuelle Mv à laquelle le procédé de commande permet de se ramener en permanence pour déterminer la matrice réelle des rapports cycliques. La matrice virtuelle Mv est de même dimension que la matrice M et reprend les relations déterminées pour la matrice M. Le procédé de commande de l'invention utilise un sélecteur d'entrée (Sel IN) et un sélecteur de sortie (Sel OUT) permettant de se ramener en permanence au cas particulier de la matrice Mv. Les sélecteurs d'entrée (Sel IN) et de sortie (Sel OUT) effectuent les permutations sur les tensions d'entrée et de sortie avant chaque calcul de rapport cyclique, le calcul des rapports cycliques s'effectuant à chaque période de découpage. Une fois les rapports cycliques calculés, on revient à la base initiale en permutant les lignes et les colonnes de la matrice virtuelle Mv de rapports cycliques calculés. La méthode employée revient donc à piloter un convertisseur virtuel 20 (figure 2) et à effectuer une permutation de la matrice des rapports cycliques calculés pour obtenir les ordres de commande du convertisseur réel. En référence à la figure 2, le convertisseur virtuel 20 comporte des interrupteurs virtuels de commande désignés f'a'u', f'a'v', f'a'w', f'b'u', f'b'v', f'b'w', f'c'u', f'c'v', f'c'w' répartis dans trois cellules de commutation A', B', C', correspondant chacun à un interrupteur de commande réel désigné ci-dessus et destiné à associer les entrées u', v', w' du convertisseur virtuel aux sorties a', b', c' du convertisseur virtuel.

Les tensions simples des phases d'entrée u, v, w sont affectées à des tensions simples virtuelles des entrées u', v', w' du convertisseur virtuel grâce au sélecteur d'entrée (Sel IN) et les tensions simples des phases de sortie a, b, c sont affectées à des tensions simples virtuelles des sorties a', b', c' du convertisseur virtuel grâce au sélecteur de sortie (Sel OUT). De cette manière, il est toujours possible de se ramener au cas particulier défini ci-dessus.

L'affectation des tensions simples des phases d'entrée u, v, w aux tensions simples des entrées u', v', w' du convertisseur virtuel consiste tout d'abord à calculer le vecteur tension d'entrée $v_{entrée}$ à partir de la relation suivante :

$$v_{entrée} = \sqrt{\frac{2}{3}}(u_{uv} + a \cdot u_{vw} + a^2 \cdot u_{wu}) \text{ avec } a = e^{j\frac{2\pi}{3}}$$

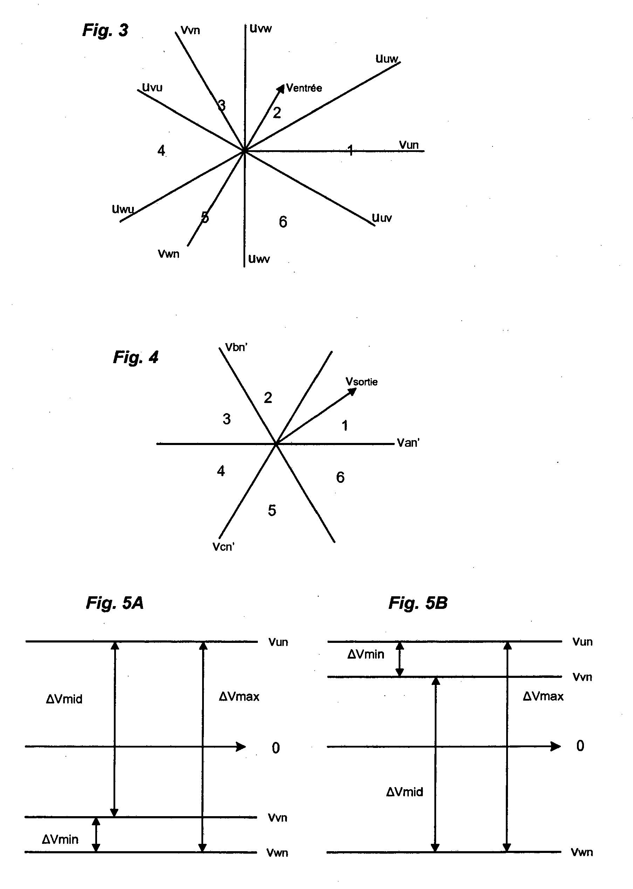

En référence à la figure 3, l'affectation des tensions simples des phases d'entrée u, v, w est ensuite réalisée en fonction du secteur (1, 2, 3, 4, 5, 6 sur la figure 3) où se situe le vecteur tension d'entrée $v_{entrée}$ calculé. La tension simple $v_{un}$, $v_{vn}$, $v_{wn}$ commune aux deux plus grandes tensions composées du secteur où se situe le vecteur tension d'entrée est reliée à la tension simple virtuelle de l'entrée u'. Les deux autres tensions des phases d'entrée sont attribuées de manière arbitraire aux deux dernières tensions simples des entrées v', w' du convertisseur virtuel. A partir du schéma de la figure 3, on obtient alors le tableau d'affectation suivant selon les secteurs :

| Secteur | u' | v' | w' |
|---------|------|-----|-----|
| 1 | u (+) | v | w |
| 2 | w (-) | v | u |
| 3 | v (+) | w | u |

| | | | |
|---|------|-----|-----|
| 4 | u (-) | w | v |
| 5 | w (+) | u | v |
| 6 | v (-) | u | w |

Les signes (+) et (-) correspondent au signe du vecteur tension $v_{entrée}$ par rapport aux tensions simples d'entrée $v_{un}$, $v_{vn}$, $v_{wn}$ représentées sur le schéma de la figure 3.

En ce qui concerne le sélecteur de sortie (Sel OUT), l'affectation des tensions simples des phases de sortie a, b, c aux tensions simples des sorties a', b', c' du convertisseur virtuel nécessite tout d'abord de calculer le vecteur tension de sortie de référence à partir de la relation suivante :

$$v_{sortie} = \sqrt{\frac{2}{3}}(v_{an'} + a \cdot v_{bn'} + a^2 \cdot v_{cn'}) \text{ avec } a = e^{j\frac{2\pi}{3}}$$

$v_{an'}$, $v_{bn'}$, $v_{cn'}$ sont représentées sur la figure 1 et correspondent aux tensions de sortie de référence. Elles sont donc issues du contrôle et leur valeur est l'image de la tension de sortie puisqu'elles représentent les tensions souhaitées pour l'instant d'échantillonnage suivant. Suivant la position du vecteur tension de sortie de référence $v_{sortie}$ par rapport à chacun des secteurs définis sur la figure 4, on obtient alors le tableau suivant dans lequel nous savons laquelle des tensions simples des phases de sortie a, b, c est la plus grande Vsup, la plus petite Vinf et la tension intermédiaire Vmid en valeur absolue :

| Secteur | Vsup | Vmid | Vinf |
|---|---|---|---|
| 1 | a | b | c |
| 2 | b | a | c |
| 3 | b | c | a |
| 4 | c | b | a |
| 5 | c | a | b |
| 6 | a | c | b |

Pour le sélecteur de sortie (Sel OUT), la tension simple de la phase de sortie à appliquer à la tension simple de la sortie a' du convertisseur virtuel doit :

-  être de même signe que la tension simple de la phase d'entrée reliée à la tension simple virtuelle de l'entrée u',

-  être la tension la plus élevée ou la plus faible des trois tensions de sortie dans le secteur considéré mais pas la valeur intermédiaire en valeur absolue parmi ces trois tensions de sortie.

En conséquence, à partir du tableau ci-dessus, la tension simple de la phase de sortie a, b, ou c à appliquer à la tension simple de l'entrée a' du convertisseur virtuel 20 :

-  ne pourra pas être le potentiel intermédiaire dans le secteur du vecteur tension de sortie

-  sera celle dont le potentiel Vsup ou Vinf dans le secteur considéré est de même signe que la tension simple de la phase d'entrée u, v ou w qui est reliée à la tension simple virtuelle de l'entrée u'.

Le tableau suivant résume les différentes règles d'affectation des tensions des phases d'entrée et des tensions de phases de sortie :

| Secteur | u' | a' | b' | c' |
|---|---|---|---|---|
| u'(+) | Sup(u,v,w) | Sup(a,b,c) | Mid(a,b,c) | Min(a,b,c) |
| u'(-) | Min(u,v,w) | Min(a,b,c) | Sup(a,b,c) | Mid(a,b,c) |

En tenant compte des relations définies pour la matrice M calculée ci-dessus, la matrice virtuelle Mv appliquée dans le convertisseur virtuel est donc la suivante :

$$Mv = \begin{cases} a'_{u'} = 1 & b'_{u'} = 1 - b'_{v'} - b'_{w'} & c'_{u'} = 1 - c'_{v'} - c'_{w'} \\[2mm] a'_{v'} = 0 & b'_{v'} = \dfrac{(u_{u'v'} - u_{v'w'}) \cdot u_{s1}}{u^2_{u'v'} + u^2_{v'w'} + u^2_{u'w'}} & c'_{v'} = \dfrac{(u_{u'v'} - u_{v'w'}) \cdot u_{s2}}{u^2_{u'v'} + u^2_{v'w'} + u^2_{u'w'}} \\[4mm] a'_{w'} = 0 & b'_{w'} = \dfrac{(u_{u'w'} + u_{v'w'}) \cdot u_{s1}}{u^2_{u'v'} + u^2_{v'w'} + u^2_{u'w'}} & c'_{w'} = \dfrac{(u_{u'w'} + u_{v'w'}) \cdot u_{s2}}{u^2_{u'v'} + u^2_{v'w'} + u^2_{u'w'}} \end{cases}$$

Si la tension simple virtuelle de l'entrée u' est positive, on a :

$$u_{s1} = V_{sup} - V_{mid} = u_{a'b'}$$
$$u_{s2} = V_{sup} \; V_{inf} = u_{a'c'}$$

Si la tension simple virtuelle de l'entrée u' est négative, on a :

$$u_{s1} = V_{sup} - V_{inf} = u_{a'c'}$$
$$u_{s2} = V_{mid} - V_{inf} = u_{a'b'}$$

Après calcul des rapports cycliques dans la matrice virtuelle Mv définie ci-dessus, le procédé de commande de l'invention consiste à effectuer si nécessaire les permutations des lignes et des colonnes de la matrice virtuelle Mv pour obtenir la matrice réelle, en tenant compte des affectations des tensions des phases d'entrée u, v, w et des phases de sortie a, b, c du convertisseur réel respectivement aux tensions des entrées u', v', w' et des sorties a', b', c' du convertisseur virtuel. Voici ci-dessous un exemple permettant d'illustrer les différentes étapes pour passer de la matrice virtuelle à la matrice réelle. Les rapports cycliques présentés dans la matrice Mv ne sont bien entendus que des exemples et ne doivent pas être interprétés de manière limitative.

- La matrice virtuelle obtenue après calcul des rapports cycliques à partir des relations définies précédemment est par exemple la suivante :

$$Mv = \begin{cases} 1 & 0.135 & 0.215 \\ 0 & 0.65 & 0.59 \\ 0 & 0.215 & 0.195 \end{cases}$$

On remarque notamment que la somme des rapports cycliques pour chaque colonne est égale à 1. De plus la première cellule de commutation est bloquée car le rapport cyclique de l'interrupteur f'a'u' est égal à 1.
- Ensuite, selon l'affectation des tensions des phases de sortie a, b, c aux tensions des sorties a', b', c' du convertisseur virtuel 20, le procédé consiste à effectuer les permutations des colonnes de la matrice Mv précédente. On obtient alors par exemple la matrice M1 suivante :

$$M1 = \begin{cases} 0.135 & 1 & 0.215 \\ 0.65 & 0 & 0.59 \\ 0.215 & 0 & 0.195 \end{cases}$$

Dans cette matrice M1 les deux premières colonnes ont été permutées par rapport à la matrice virtuelle Mv initiale car :

- la tension simple de la phase de sortie a est reliée à la tension virtuelle de la sortie b',

- la tension simple de la phase de sortie b est reliée à la tension virtuelle de la sortie a',

- la tension simple de la phase de sortie c est reliée à la tension virtuelle de la sortie c'.

- Selon l'affectation des tensions des phases d'entrée u, v, w aux tensions virtuelles des entrées u', v', w' du convertisseur virtuel, le procédé consiste ensuite à permuter les lignes de la matrice M1 précédente pour obtenir la matrice M2 suivante :

$$M2 = \begin{Bmatrix} 0.65 & 0 & 0.59 \\ 0.135 & 1 & 0.215 \\ 0.215 & 0 & 0.195 \end{Bmatrix}$$

Cette matrice M2 est obtenue en permutant les deux premières lignes de la matrice M1 car:

- la tension simple de la phase d'entrée u est reliée à la tension virtuelle de l'entrée v',

- la tension simple de la phase d'entrée v est reliée à la tension virtuelle de l'entrée u',

- la tension simple de la phase d'entrée w est reliée à la tension virtuelle de l'entrée w'.

Les deux étapes de permutation peuvent bien entendu être réalisées dans l'ordre inverse.

La matrice M2 ainsi obtenue est la matrice réelle de rapports cycliques à appliquer aux neuf interrupteurs de la matrice de commutation du convertisseur réel. Les deux permutations effectuées ont notamment déplacé la position de la phase nulle, cette dernière étant identifiée par la ligne de la matrice M2 qui ne comporte pas de valeur nulle. La phase nulle est donc sur la phase d'entrée v car la deuxième ligne de la matrice M2 est non nulle.

Bloquer une cellule de commutation du convertisseur sur une période de découpage en introduisant une phase nulle permet de réduire d'un tiers le nombre de commutations et donc de réduire à la fois les pertes par commutation et les tensions de mode commun. Cependant, le blocage d'une cellule au cours de la période de découpage ne permet pas d'atteindre l'optimum en terme de réduction des pertes par commutation et des tensions de mode commun puisque la cellule bloquée ne permet pas d'imposer systématiquement la somme totale la plus faible en valeur absolue des tensions d'entrée aux deux autres cellules qui commutent. La performance optimale est donc atteinte lorsque la tension totale découpée en valeur absolue sur la période de découpage par les trois cellules est la plus faible possible.

Pour cela, le procédé de commande de l'invention consiste également à modifier la position de la phase nulle dans la matrice de rapports cycliques obtenue. Cette particularité du procédé de commande de l'invention ne doit pas être comprise comme s'appliquant uniquement à la matrice de rapports cycliques obtenue grâce à la méthode décrite précédemment utilisant la matrice virtuelle Mv. Il faut comprendre que cette nouvelle particularité du procédé de l'invention qui consiste à déplacer la phase nulle peut être appliquée à une matrice de rapports cycliques comportant une phase nulle, quelle que soit la méthode par laquelle cette matrice a été obtenue.

Dans un convertisseur matriciel, trois types de phase nulle sont possibles :

- les trois interrupteurs du haut fau, fbu, fcu sont commandés à l'état fermé (111),

- les trois interrupteurs du milieu fav, fbv, fcv sont commandés à l'état fermé (222),

- les trois interrupteurs du bas faw, fbw, fcw sont commandés à l'état fermé (333).

Dans la mesure où cela est nécessaire, le procédé de commande de l'invention permettant la diminution des pertes par commutation et des courants de mode commun consiste à :

- supprimer dans la matrice de rapports cycliques la phase nulle et,

- choisir et placer dans la matrice de rapports cycliques une nouvelle phase nulle parmi les trois possibles définies ci-dessus afin de résoudre le problème précité.

Tout d'abord, il s'agit tout de même de justifier qu'un changement de position de la phase nulle permet réellement de diminuer la tension totale commutée en valeur absolue. Pour cela, pour chaque phase nulle définie ci-dessus, il est possible de partir d'une séquence type de quatre états actifs sans phase nulle, d'y intégrer un passage par la phase nulle considérée et de regarder quelle séquence permet de commuter la tension la plus faible. Le passage d'un état actif à l'autre ne devra pas engendrer la commutation de deux interrupteurs en même temps, c'est-à-dire ne pas entraîner la modification de deux chiffres en même temps.

Par exemple, à partir d'une séquence comportant les quatre états actifs suivants :

322
323
313
311

On positionne les trois phases nulles possibles au sein de ces quatre états actifs de manière à obtenir le tableau suivant :

| Séquence A | Séquence B | Séquence C |
|---|---|---|
| 322 | **222** | 322 |
| 323 | 322 | 323 |
| **333** | 323 | 313 |
| 313 | 313 | 311 |
| 311 | 311 | **111** |

A partir de la figure 5A indiquant les écarts ($\Delta$Vmax, $\Delta$Vmin, $\Delta$Vmid) entre les tensions simples $v_{un}$, $v_{vn}$, $v_{wn}$ des phases d'entrée u, v, w, on remarque que pour la séquence A :

- le passage de l'état actif 322 à 323 revient à passer de la tension de la phase d'entrée v à la tension de la phase d'entrée w, donc à commuter $\Delta$Vmin,

- le passage de l'état actif 323 à 333 revient à passer de la tension de la phase d'entrée v à la tension de la phase d'entrée w, donc à commuter $\Delta$Vmin,

- le passage de l'état actif 333 à 313 revient à passer de la tension de la phase d'entrée w à la tension de la phase d'entrée u, donc à commuter $\Delta$Vmax,

- le passage de l'état actif 313 à 311 revient à passer de la tension de la phase d'entrée w à la tension de la phase d'entrée u, donc à commuter $\Delta$Vmax,

Soit pour la séquence A, la tension totale commutée vaut Utot=2 $\Delta$Vmax+2 $\Delta$Vmin.

En réalisant le même raisonnement pour les séquences B et C définies dans le tableau ci-dessus, on obtient :

- Séquence B Utot=2 $\Delta$vmax+$\Delta$vmin

- Séquence C Utot=3 $\Delta$Vmax

De même, à partir de la figure 5B, en modifiant le signe de la tension commutée, on obtient :

- Séquence A Utot=2 $\Delta$Vmax+2 $\Delta$Vmid

- Séquence B Utot=2 $\Delta$Vmax+$\Delta$Vmid

- Séquence C Utot=3 $\Delta$Vmax

Par conséquent, si initialement la phase nulle était sur les trois interrupteurs du bas, le replacement de cette phase nulle sur les interrupteurs du milieu permettrait de diminuer la tension totale commutée et donc de diminuer les pertes par commutation et les tensions de mode commun.

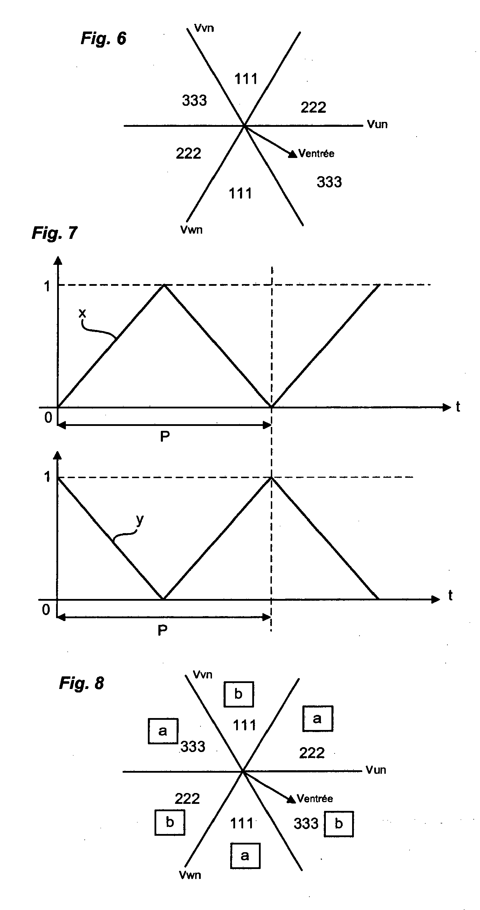

Pour positionner correctement la phase nulle dans la matrice de commande, il faut déterminer le vecteur tension d'entrée $v_{entrée}$ et le positionner par rapport aux différentes tensions simples $v_{un}$, $v_{vn}$, $v_{wn}$ des phases d'entrée u, v, w comme représenté sur la figure 6. Pour rappel, on a :

$$v_{entrée} = \sqrt{\frac{2}{3}}(u_{uv} + a \cdot u_{vw} + a^2 \cdot u_{wu}) \text{ avec } a = e^{j\frac{2\pi}{3}}$$

Sur la figure 6, le secteur (111, 222, 333) dans lequel se trouve le vecteur tension d'entrée $v_{entrée}$ correspond à l'emplacement optimal pour la phase nulle (par exemple 333 sur la figure 6). En repartant de l'exemple précédent ayant permis d'obtenir la matrice M2 définie ci-dessus, le procédé consiste donc si nécessaire à supprimer la phase nulle et à replacer la phase nulle en vue de minimiser les pertes par commutation et les tensions de mode commun.

La matrice M2 obtenue était la suivante :

$$M2 = \begin{Bmatrix} 0.65 & 0 & 0.59 \\ 0.135 & 1 & 0.215 \\ 0.215 & 0 & 0.195 \end{Bmatrix}$$

La phase nulle est représentée par la deuxième ligne de la matrice M2. Si l'on considère par exemple que le vecteur tension d'entrée déterminé par la formule ci-dessus se trouve dans le secteur pour lequel la phase nulle devrait être sur la troisième ligne de la matrice M2 (figure 6), il faut donc modifier le placement de la phase nulle. Pour cela, le procédé de commande de l'invention consiste à sélectionner le rapport cyclique le plus petit de la ligne (0.135 sur la deuxième ligne de la matrice M2) comportant la phase nulle et à le soustraire à tous les rapports cycliques de cette même ligne. On obtient alors :

$$M3 = \begin{Bmatrix} 0.65 & 0 & 0.59 \\ 0.135-0.135 & 1-0.135 & 0.215-0.135 \\ 0.215 & 0 & 0.195 \end{Bmatrix}$$

$$M3 = \begin{Bmatrix} 0.65 & 0 & 0.59 \\ 0 & 0.865 & 0.08 \\ 0.215 & 0 & 0.195 \end{Bmatrix}$$

Dans la matrice M3 ainsi obtenue, la phase nulle est donc supprimée puisque toutes les lignes comportent au moins un rapport cyclique égal à zéro.

Pour placer la phase nulle sur la ligne devenant la nouvelle phase nulle, c'est-à-dire la troisième ligne, le procédé de commande consiste à ajouter le rapport cyclique retranché précédemment aux rapports cycliques de la cette ligne. On obtient alors :

$$M4 = \begin{Bmatrix} 0.65 & 0 & 0.59 \\ 0 & 0.865 & 0.08 \\ 0.215+0.135 & 0+0.135 & 0.195+0.135 \end{Bmatrix}$$

$$M4 = \begin{Bmatrix} 0.65 & 0 & 0.59 \\ 0 & 0.865 & 0.08 \\ 0.35 & 0.135 & 0.33 \end{Bmatrix}$$

La phase nulle est alors bien sur la troisième ligne car celle-ci ne comporte alors aucun rapport cyclique égal à zéro. On remarquera dans ce cas que la matrice M4 qui donne le résultat optimal en terme de réduction des pertes par commutation et de réduction de la tension de mode commun ne comporte pas de rapport cyclique égal à 1. L'introduction de la nouvelle phase nulle permet donc un découpage des trois tensions d'entrée ce qui sous entend qu'aucune des trois cellules reste dans un état bloqué sur la période de découpage. L'introduction de la nouvelle phase nulle permet également de limiter à huit le nombre d'états actifs sur une période de découpage à l'instar de la phase nulle initiale qui permettait de bloquer une cellule sur une période de découpage.

Une fois la matrice de rapports cycliques définitive obtenue, le procédé de commande consiste à définir les ordres de commande des neuf interrupteurs bidirectionnels de la matrice de commutation de manière à réaliser la modulation de type MLI. Le variateur de vitesse utilise pour cela une modulation intersective destinée à effectuer des comparaisons entre des modulantes représentées par les rapports cycliques de la matrice de commande et une ou plusieurs porteuses déterminées. Selon l'invention, le variateur de vitesse utilise par exemple deux porteuses x, y triangulaires distinctes inversées (figure 7), de fréquence égale à la fréquence de découpage.

Ces deux porteuses x, y sont utilisées pour définir les rapports cycliques des trois cellules A, B, C du convertisseur matriciel. Pour chaque cellule de commutation A, B, C, les deux porteuses x, y définissent les ordres de commande de deux des trois interrupteurs de la cellule. L'ordre de commande du troisième interrupteur est automatiquement défini par le complément des deux autres étant donné que la somme des rapports cycliques d'une cellule de commutation est toujours égale à un.

Selon l'invention, il s'agit donc de sélectionner les rapports cycliques de la matrice de commande à appliquer aux deux porteuses x, y du modulateur de type MLI. Cette sélection est réalisée de la manière suivante :

-   les modulantes d'une ligne de la matrice de rapports cycliques s'appliquent toujours à la même porteuse,

-   la ligne de la matrice de rapports cycliques comportant le rapport cyclique le plus grand est exclue,

-   les deux lignes non exclues sont comparées chacune à l'une des porteuses x, y.

Le choix de la porteuse à appliquer à l'une ou l'autre des lignes de rapports cycliques non exclues permet de modifier la séquence des phases actives et nulle sur une demi-période de découpage.

Selon le choix de la porteuse, la phase nulle de la matrice de commande peut se trouver au début ou à la fin de la demi-période de découpage.

De plus, pour préserver les avantages du placement de la nouvelle phase nulle, les implantations des rapports cycliques de la phase nulle ne devront pas générer de double ou triple commutation, c'est-à-dire de commutation de deux ou trois bras en même temps. Afin de supprimer toute possibilité de double ou triple commutation, il est nécessaire que le modulateur respecte la règle suivante selon laquelle si l'une des deux lignes de rapports cycliques non exclues porte la phase nulle alors cette ligne doit être considérée comme la ligne maître. La ligne maître sera comparée alternativement à la première porteuse x puis à la seconde porteuse y à chaque changement de secteur du vecteur de la tension d'entrée $v_{entrée}$. Le choix de la porteuse initiale x ou y utilisée pour la comparaison est arbitraire et fixé par exemple comme sur la figure 8. L'autre ligne non exclue est comparée à la porteuse non utilisée par la ligne maître.

En revanche, si aucune des deux lignes non exclues ne porte la phase nulle, alors la ligne maître est celle qui comporte le rapport cyclique non nul le plus faible, et la ligne esclave est l'autre ligne non exclue. De même que précédemment, la ligne maître sera comparée à chacune des porteuses x, y successivement, le choix de la porteuse initiale étant également arbitraire.

En repartant de l'exemple de la matrice M4 obtenue précédemment :

$$M4 = \begin{Bmatrix} 0.65 & 0 & 0.59 \\ 0 & 0.865 & 0.08 \\ 0.35 & 0.135 & 0.33 \end{Bmatrix}$$

On remarque que la ligne du milieu est la ligne exclue car elle comporte le plus grand rapport cyclique. Parmi les lignes non exclues, la troisième ligne est celle comportant la phase nulle. Par conséquent la troisième ligne est la ligne maître et la première ligne est la ligne esclave. Au cours de la première période de découpage P, la ligne maître est donc comparée à l'une des deux porteuses, par exemple arbitrairement la première porteuse x, tandis que la ligne esclave est comparée à l'autre porteuse, c'est-à-dire la seconde porteuse y.

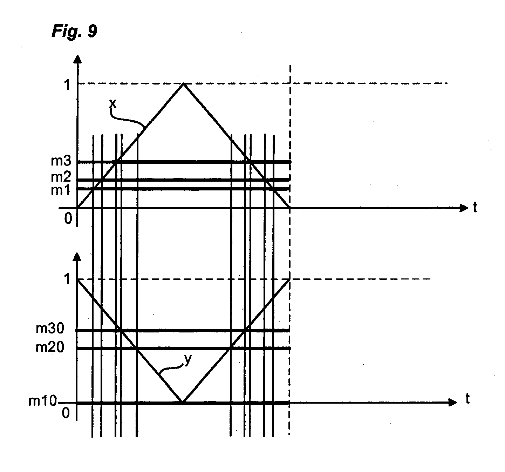

Sur la figure 9, sont représentées des modulantes m1, m2, m3, m10, m20, m30 qui sont par exemple appliquées aux deux porteuses x, y afin d'en déduire les ordres de commande des interrupteurs dans le temps sur une période de découpage. Les modulantes m1, m2, m3 appliquées à la première porteuse x représentent les rapports cycliques de la ligne de la matrice de rapports cycliques à appliquer à ladite porteuse x et les modulantes m10, m20, m30 appliquées à la seconde porteuse y représentent les rapports cycliques de la ligne de la matrice de rapports cycliques à appliquer à ladite porteuse y. Ces modulantes représentées sur la figure 9 ne sont que des exemples et ne sont pas représentatives de la matrice M4 définie ci-dessus.

## Revendications

1. Procédé de commande mis en oeuvre dans un variateur de vitesse de type convertisseur matriciel comportant :

   - trois phases d'entrée (u, v, w) connectées à une source de tension alternative et trois phases de sortie (a, b, c) connectées à une charge électrique,
   - neuf interrupteurs électroniques bidirectionnels en courant et en tension (fau, fav, faw, fbu, fbv, fbw, fcu, fcv, fcw) répartis dans trois cellules de commutation (A, B, C) et destinés à être commandés individuellement pour connecter une phase de sortie à l'une quelconque des phases d'entrée, la commutation des interrupteurs du convertisseur obéissant à une matrice de rapports cycliques permettant d'obtenir une tension de sortie à destination de la charge,
   - ladite matrice de rapports cycliques comportant une phase nulle,
   - **caractérisé en ce que** le procédé comporte :
   - une étape de suppression de la phase nulle dans la matrice de rapports cycliques,
   - une étape de positionnement d'une nouvelle phase nulle dans la matrice de rapports cycliques afin de réduire au maximum les pertes par commutation et les tensions de mode commun.

2. Procédé selon la revendication 1, **caractérisé en ce que** l'étape de positionnement de la nouvelle phase nulle consiste à déterminer le vecteur tension d'entrée ($V_{entrée}$) et à déterminer l'emplacement de la nouvelle phase nulle en fonction de la position de ce vecteur par rapport aux différentes tensions simples d'entrée ($v_{un}$, $v_{vn}$, $v_{wn}$).

3. Procédé selon la revendication 1 ou 2, **caractérisé en ce que** les ordres de commande des interrupteurs électroniques bidirectionnels sont déterminés par modulation de type intersective.

4. Procédé selon la revendication 3, **caractérisé en ce que** la modulation de type intersective est mise en oeuvre par application des rapports cycliques de la matrice de rapports cycliques sous forme de modulantes (m1-m3, m10-m30) sur deux porteuses (x, y) distinctes.

5. Procédé selon la revendication 4, **caractérisé en ce que** les deux porteuses (x, y) sont de forme triangulaire, de fréquence égale à la fréquence de découpage, l'une des porteuses étant l'inverse de l'autre porteuse.

6. Procédé selon la revendication 4 ou 5, **caractérisé en ce que** les modulantes d'une ligne de la matrice de rapports cycliques s'appliquent toujours à la même porteuse (x, y).

7. Procédé selon l'une des revendications 4 à 6, **caractérisé en ce que** la ligne de la matrice de rapports cycliques comportant le rapport cyclique le plus grand n'est appliquée à aucune des deux porteuses (x, y) et **en ce que** les deux lignes non exclues sont comparées chacune à l'une des porteuses (x, y).

**8.** Variateur de vitesse de type convertisseur matriciel comportant :

- trois phases d'entrée (u, v, w) connectées à une source de tension alternative et trois phases de sortie (a, b, c) connectées à une charge électrique,
- neuf interrupteurs électroniques bidirectionnels en courant et en tension (fau, fav, faw, fbu, fbv, fbw, fcu, fcv, fcw) répartis dans trois cellules de commutation (A, B, C) et destinés à être commandés individuellement pour connecter une phase de sortie à l'une quelconque des phases d'entrée, la commutation des interrupteurs du convertisseur obéissant à une matrice de rapports cycliques permettant d'obtenir une tension de sortie à destination de la charge,
- ladite matrice de rapports cycliques comportant une phase nulle,
- **caractérisé en ce que** le variateur comporte :
- des moyens pour supprimer la phase nulle dans l'a matrice de rapports cycliques,
- des moyens pour positionner une nouvelle phase nulle dans la matrice de rapports cycliques afin de réduire au maximum les pertes par commutation et les tensions de mode commun.

**9.** Variateur de vitesse selon la revendication 8, **caractérisé en ce qu'**il comporte des moyens de détermination du vecteur tension d'entrée ($v_{entrée}$) et de détermination de l'emplacement de la nouvelle phase nulle en fonction de la position de ce vecteur par rapport aux différentes tensions simples d'entrée ($v_{un}$, $v_{vn}$,, $v_{wn}$).

**10.** Variateur de vitesse selon la revendication 8 ou 9, **caractérisé en ce que** les ordres de commande des interrupteurs électroniques bidirectionnels sont déterminés par modulation de type intersective.

**11.** Variateur de vitesse selon la revendication 10, **caractérisé en ce que** la modulation de type intersective est mise en oeuvre par application des rapports cycliques de la matrice de rapports cycliques sous forme de modulantes (m1-m3, m10-m30) sur deux porteuses (x, y) distinctes.

**12.** Variateur de vitesse selon la revendication 11, **caractérisé en ce que** les deux porteuses (x, y) sont de forme triangulaire, de fréquence égale à la fréquence de découpage, l'une des porteuses étant l'inverse de l'autre porteuse.

**Patentansprüche**

**1.** Steuerverfahren, das in einem Stromrichter des Matrixwandlertyps ausgeführt wird, der Folgendes umfasst:

- drei Eingangsphasen (u, v, w), die mit einer Wechselspannungsquelle verbunden sind, und drei Ausgangsphasen (a, b, c), die mit einer elektrischen Last verbunden sind,
- neun strom- und spannungstechnisch bidirektionale elektronische Ein/Aus-Schalter (fau, fav, faw, fbu, fbv, fbw, fcu, fcv, fcw), die auf drei Kommutierungszellen (A, B, C) verteilt sind und dazu bestimmt sind, einzeln gesteuert zu werden, um eine Ausgangsphase mit einer beliebigen der Eingangsphasen zu verbinden, wobei die Kommutierung der Ein/AusSchalter des Wandlers einer Matrix zyklischer Verhältnisse gehorcht, die ermöglichen, eine Ausgangsspannung für die Last zu erhalten,
- wobei die Matrix zyklischer Verhältnisse eine Null-Phase enthält,
- **dadurch gekennzeichnet, dass** das Verfahren Folgendes umfasst:
- einen Schritt des Beseitigens der Null-Phase in der Matrix zyklischer Verhältnisse,
- einen Schritt des Positionierens einer neuen Null-Phase in der Matrix zyklischer Verhältnisse, um die Verluste durch die Kommutierung und die Gleichtaktspannungen maximal zu verringern.

**2.** Verfahren nach Anspruch 1, **dadurch gekennzeichnet, dass** der Schritt des Positionierens der neuen Null-Phase darin besteht, den Eingangsspannungsvektor ($v_{eingang}$) zu bestimmen und den Ort der neuen Null-Phase als Funktion der Position dieses Vektors in Bezug auf die verschiedenen einfachen Eingangsspannungen ($v_{un}$, $v_{vn}$, $v_{wn}$) zu bestimmen.

**3.** Verfahren nach Anspruch 1 oder 2, **dadurch gekennzeichnet, dass** die Steuerreihenfolgen der bidirektionalen elektronischen Ein/Aus-Schalter durch Modulation des intersektiven Typs bestimmt werden.

**4.** Verfahren nach Anspruch 3, **dadurch gekennzeichnet, dass** die Modulation des intersektiven Typs durch Anwenden zyklischer Verhältnisse der Matrix zyklischer Verhältnisse in Form von Modulationen (ml-m3, m10-m30) auf zwei verschiedene Träger (x, y) ausgeführt wird.

**5.** Verfahren nach Anspruch 4, **dadurch gekennzeichnet, dass** die zwei Träger (x, y) eine Dreieckform und eine Frequenz, die gleich der Kappungsfrequenz ist, haben, wobei einer der Träger die Umkehrung des anderen Trägers ist.

**6.** Verfahren nach Anspruch 4 oder 5, **dadurch gekennzeichnet, dass** die Modulationen einer Zeile der Matrix zyklischer Verhältnisse stets auf denselben Träger (x, y) angewendet werden.

**7.** Verfahren nach einem der Ansprüche 4 bis 6, **dadurch gekennzeichnet, dass** die Zeile der Matrix zyklischer Verhältnisse, die das größte zyklische Verhältnis enthält, auf keinen der zwei Träger (x, y) angewendet wird und dass die zwei nicht ausgeschlossenen Zeilen jeweils mit einem der Träger (x, y) verglichen werden.

**8.** Stromrichter des Matrixwandlertyps, der Folgendes umfasst:

- drei Eingangsphasen (u, v, w), die mit einer Wechselspannungsquelle verbunden sind, und drei Ausgangsphasen (a, b, c), die mit einer elektrischen Last verbunden sind,
- neun strom- und spannungstechnisch bidirektionale elektronische Ein/Aus-Schalter (fau, fav, faw, fbu, fbv, fbw, fcu, fcv, fcw), die auf drei Kommutierungszellen (A, B, C) verteilt sind und dazu bestimmt sind, einzeln gesteuert zu werden, um eine Ausgangsphase mit einer beliebigen der Eingangsphasen zu verbinden, wobei die Kommutierung der Ein/AusSchalter des Wandlers einer Matrix zyklischer Verhältnisse gehorcht, die ermöglicht, eine Ausgangsspannung für die Last zu erhalten,
- wobei die Matrix zyklischer Verhältnisse eine Null-Phase enthält,
- **dadurch gekennzeichnet, dass** der Stromrichter Folgendes umfasst:
- Mittel, um die Null-Phase in der Matrix zyklischer Verhältnisse zu beseitigen,
- Mittel, um eine neue Null-Phase in der Matrix zyklischer Verhältnisse zu positionieren, um die Verluste durch Kommutierung und die Gleichtaktspannungen maximal zu verringern.

**9.** Stromrichter nach Anspruch 8, **dadurch gekennzeichnet, dass** er Mittel zum Bestimmen des Eingangsspannungsvektors ($v_{eingang}$) und zum Bestimmen des Ortes der neuen Null-Phase als Funktion der Position dieses Vektors in Bezug auf die verschiedenen einfachen Eingangsspannungen ($v_{un}$, $v_{vn}$, $v_{wn}$) umfasst.

**10.** Stromrichter nach Anspruch 8 oder 9, **dadurch gekennzeichnet, dass** die Steuerreihenfolgen der bidirektionalen elektronischen Ein/Aus-Schalter durch Modulation des intersektiven Typs bestimmt sind.

**11.** Stromrichter nach Anspruch 10, **dadurch gekennzeichnet, dass** die Modulation des intersektiven Typs durch Anwenden der zyklischen Verhältnisse der Matrix zyklischer Verhältnisse in Form von Modulationen (ml-m3, m10-m30) auf zwei verschiedene Träger (x, y) ausgeführt wird.

**12.** Stromrichter nach Anspruch 11, **dadurch gekennzeichnet, dass** die zwei Träger (x, y) eine Dreieckform und eine Frequenz, die gleich der Kappungsfrequenz ist, haben, wobei einer der Träger die Umkehrung des anderen Trägers ist.

**Claims**

**1.** A control method implemented in a variable speed drive of matrix converter type comprising:

- three input phases (u, v, w) connected to an AC voltage source and three output phases (a, b, c) connected to an electrical load,
- nine current and voltage bidirectional electronic switches (fau, fav, faw, fbu, fbv, fbw, fcu, fcv, fcw) distributed among three switching cells (A, B, C) and intended to be controlled individually so as to connect an output phase to any one of the input phases, the switching of the switches of the converter obeying a matrix of duty cycles making it possible to obtain an output voltage destined for the load,
- said matrix of duty cycles comprising a null phase,
- **characterized in that** the method comprises:
- a step of eliminating the null phase from the matrix of duty cycles,
- a step of positioning a new null phase in the matrix of duty cycles so as to reduce to the maximum the switching losses and the common-mode voltages.

**2.** The method as claimed in claim 1, **characterized in that** the step of positioning the new null phase consists in determining the input voltage vector ($V_{input}$) and in determining the location of the new null phase as a function of the position of this vector with respect to the various input simple voltages ($V_{un}$, $V_{vn}$, $V_{wn}$).

**3.** The method as claimed in claim 1 or 2, **characterized in that** the control commands for the bidirectional electronic switches are determined by modulation of intersective type.

**4.** The method as claimed in claim 3, **characterized in that** the modulation of intersective type is implemented by applying duty cycles of the matrix of duty cycles in the form of modulants (m1-m3, m10-m30) on two distinct carriers (x, y).

**5.** The method as claimed in claim 4, **characterized in that** the two carriers (x, y) are of triangular shape, of frequency equal to the switching frequency, one of the carriers being the inverse of the other carrier.

**6.** The method as claimed in claim 4 or 5, **characterized in that** the modulants of a row of the matrix of duty cycles always apply to the same carrier (x, y).

**7.** The method as claimed in one of claims 4 to 6, **characterized in that** the row of the matrix of duty cycles comprising the highest duty cycle is not applied to either of the two carriers (x, y) and **in that** the two non-excluded rows are each compared with one of the carriers (x, y).

**8.** A variable speed drive of matrix converter type comprising:

- three input phases (u, v, w) connected to an AC voltage source and three output phases (a, b, c) connected to an electrical load,
- nine current and voltage bidirectional electronic switches (fau, fav, faw, fbu, fbv, fbw, fcu, fcv, fcw) distributed among three switching cells (A, B, C) and intended to be controlled individually so as to connect an output phase to any one of the input phases, the switching of the switches of the converter obeying a matrix of duty cycles making it possible to obtain an output voltage destined for the load,
- said matrix of duty cycles comprising a null phase,
- **characterized in that** the variable drive comprises:
- means for eliminating the null phase from the matrix of duty cycles,
- means for positioning a new null phase in the matrix of duty cycles so as to reduce to the maximum the switching losses and the common-mode voltages.

**9.** The variable speed drive as claimed in claim 8, **characterized in that** it comprises means for determining the input voltage vector ($V_{input}$) and for determining the location of the new null phase as a function of the position of this vector with respect to the various input simple voltages ($V_{un}$, $V_{vn}$, $V_{wn}$).

**10.** The variable speed drive as claimed in claim 8 or 9, **characterized in that** the control commands for the bidirectional electronic switches are determined by modulation of intersective type.

**11.** The variable speed drive as claimed in claim 10, **characterized in that** the modulation of intersective type is implemented by applying duty cycles of the matrix of duty cycles in the form of modulants (m1-m3, m10-m30) on two distinct carriers (x, y).

**12.** The variable speed drive as claimed in claim 11, **characterized in that** the two carriers (x, y) are of triangular shape, of frequency equal to the switching frequency, one of the carriers being the inverse of the other carrier.

**Fig. 1**

**Fig. 2**

**Fig. 3**

**Fig. 4**

**Fig. 5A**

**Fig. 5B**

*Fig. 6*

*Fig. 7*

*Fig. 8*

*Fig. 9*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2006129620 A

**Littérature non-brevet citée dans la description**

- **AKIO ISHIGURO ; TAKESHI FURUHASHI ; SHIGERU OKUMA.** A novel control method for forced commutated cycloconverters using instantaneous values of input line-to-line voltages. *IEEE TRANSACTIONS ON INDUSTRIAL ELECTRONICS,* Juin 1991, vol. 38 (3